(19) **Europäisches Patentamt**

**European Patent Office**

**Office européen des brevets**

(11) **EP 1 441 457 A1**

(12) **EUROPEAN PATENT APPLICATION**
published in accordance with Art. 158(3) EPC

(43) Date of publication:
28.07.2004 Bulletin 2004/31

(51) Int Cl.⁷: **H04J 11/00**

(21) Application number: 02777966.9

(22) Date of filing: 25.10.2002

(86) International application number:
**PCT/JP2002/011119**

(87) International publication number:
**WO 2003/039049 (08.05.2003 Gazette 2003/19)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: 30.10.2001 JP 2001332910
30.10.2001 JP 2001332911
30.10.2001 JP 2001332912

(71) Applicant: **Sanyo Electric Co., Ltd.**
**Moriguchi-shi, Osaka 570-8677 (JP)**

(72) Inventors:
• **YUASA, Masatoshi, c/o Sanyo Electric Co., Ltd.**
**Moriguchi City, Osaka 570-8677 (JP)**
• **HIRAMATSU, Tatsuo,**
**c/o Sanyo Electric Co., Ltd.**
**Moriguchi City, Osaka 570-8677 (JP)**
• **HANAFUSA, Sumio, c/o Sanyo Electric Co., Ltd.**
**Moriguchi City, Osaka 570-8677 (JP)**

(74) Representative: **Glawe. Delfs. Moll**
**Patentanwälte**
**Postfach 26 01 62**
**80058 München (DE)**

(54) **DIRECT CONVERSION RECEIVER**

(57)   A direct conversion receiver comprises a down converter for frequency-converting an analog RF signal modulated by an OFDM method such that the center frequency of the occupied band of a receiving object segment is a frequency of zero; AD conversion means for converting a down converted signal obtained by the down converter into a digital signal; FFT means for subjecting the signal obtained by the AD conversion means to fast Fourier transform, to transform the signal from time axis data to frequency axis data; and unnecessary component removal means for removing from an output signal of the FFT means an unnecessary component other than the receiving object segment.

FIG. 5

**Description**

Technical Field

The present invention relates to a direct conversion receiver, and more particularly, to a direct conversion receiver that can be utilized for partial receiving for receiving only one segment in terrestrial digital TV broadcasting.

Background Art

In recent years, in a system for transmitting a video signal or an audio signal, an OFDM (Orthogonal Frequency Division Multiplexing) method has been proposed as a method superior in high-quality transmission and improvement in frequency utilization efficiency.

The OFDM method is a modulation method for causing a lot of sub-carriers to stand in a band including one channel. For example, an analog TV signal is converted into a digital signal, and the digital signal is then subjected to data compression by MPEG (Moving Picture Expert Group). A data signal thus obtained is subjected to byte interleaving and bit interleaving so as to distribute the cause of errors in a transmission path, for example, noises, and is subjected to mapping corresponding to a modulation method such as QPSK (Quadrature Phase Shift Keying) and 16 QAM (Quadrature Amplitude Modulation).

Data obtained by the mapping is subjected to time interleaving and frequency interleaving for dispersing the cause of errors in a transmission path, for example, fading, is then subjected to IFFT (inverse fast Fourier transform), is subjected to orthogonal modulation, is then frequency-converted into an RF frequency, and is transmitted.

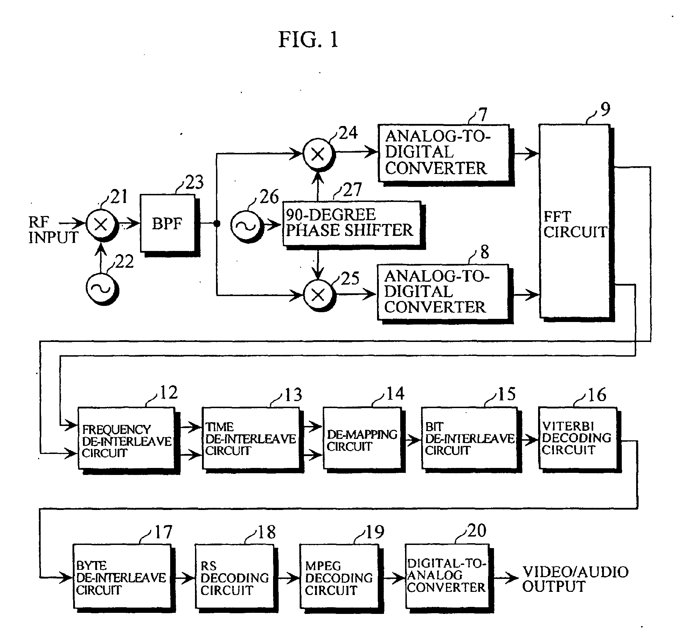

Fig. 1 illustrates the configuration of a digital television receiver.

In the digital television receiver, an operation entirely reverse to that on the transmission side is performed, to demodulate a TV signal.

An RF signal received by an antenna is inputted to a mixer 21. A signal corresponding to channel selection is also inputted to the mixer 21 from a local signal generator 22, and a signal obtained by frequency conversion is outputted such that a desired frequency falls within a band of a BPF (Band-Pass Filter) 23. In the BPF 23, only a desired frequency component is extracted.

Outputs of the BPF 23 are respectively inputted to mixers 24 and 25. To the mixers 24 and 25, a cosine signal and a sine signal are respectively inputted from a 90-degree phase shifter 27 having as an input a signal from a local signal generator 26. The mixers 24 and 25 respectively down-convert the outputs of the BPF 23 which are IF (Intermediate Frequency) signals, convert the down-converted outputs into Low IF signals each comprising a real axis (I axis) component and an imaginary axis (Q axis) component, and output the Low IF signals to analog-to-digital converters 7 and 8.

In each of the analog-to-digital converters 7 and 8, an analog signal (an I axis component and a Q axis component) is converted into a digital signal, and the digital signal is outputted to an FFT circuit 9. In the FFT circuit 9, the input signal is subjected to fast Fourier transform (FFT), to transform the signal from time axis data to frequency axis data and output the signal to a frequency de-interleave circuit 12.

In the frequency de-interleave circuit 12, frequency interleaving carried out in order to compensate for a signal having a particular frequency which is missing due to the reflection of electro-magnetic waves, for example, is released. An output of the frequency de-interleave circuit 12 is fed to a time de-interleave circuit 13. The-time de-interleave circuit 13 releases time interleaving carried out for fading resistance or the like.

An I-axis and Q-axis signal obtained by the time deinterleaving is fed to a de-mapping circuit 14, and is decoded into 2 bits (QPSK), 4 bits (16 QAM), or 6 bits (64 QAM). A signal obtained by de-mapping is fed to a bit de-interleave circuit 15. The bit de-interleave circuit 15 releases bit interleaving carried out for the purpose of increasing error resistance. An output of the bit de-interleave circuit 15 is fed to a Viterbi decoding circuit 16. The Viterbi decoding circuit 16 makes error correction using a convolutional code generated on the transmission side.

A signal obtained by Viterbi decoding is fed to a byte de-interleave circuit 17. The byte de-interleave circuit 17 releases byte interleaving carried out for the purpose of increasing error resistance, similarly to bit interleaving. An output of the byte de-interleave circuit 17 is fed to an RS decoding circuit 18. The RS decoding circuit 18 performs RS (Reed-Solomon) decoding to make error correction. A signal obtained by the error correction is fed to an MPEG decoding circuit 19. The MPEG decoding circuit 19 extends a signal obtained by the error correction (a compressed signal), and outputs the extended signal to a digital-to-analog conversion circuit 20. The digital-to-analog conversion circuit 20 converts the signal fed from the MPEG decoding circuit 19 into an analog video/analog audio signal, and outputs the signal.

In a Japanese terrestrial digital broadcasting system, a segment-divided signal format is employed. In the case of television broadcasting, 13 segments are collectively transmitted into a band of 6 MHz. Further, in the one segment at the center out of the 13 segments, such partial receiving that data broadcasting or the like can be performed by only the one segment is possible. With respect to the receiving of the 13 segments, the band width is only reduced to one-thirteenth in the partial receiving, so that receiving is possible in approximately the same configuration.

Fig. 2 illustrates a spectrum in each of the blocks shown in Fig. 1 in a case where partial receiving is performed.

Fig. 2 (a) illustrates a spectrum of an RF (Radio Frequency) signal corresponding to terrestrial digital broadcasting (UHF). In Fig. 2 (a), a spectrum corresponding to UHF Channels 14 to 16 is illustrated. One channel has a band width of 6 HMz, and is composed of 13 segments. The segment at the center out of the segments corresponds to a signal for partial receiving.

Fig. 2 (b) illustrates a spectrum of the RF signal corresponding to the UHF Channel 15, where the spectrum corresponds to the six segments S15-0 to S15-6 at the center out of the 13 segments.

Fig. 2 (c) illustrates a spectrum of an IF signal corresponding to the UHF Channel 15 outputted from the mixer 21, where the spectrum corresponds to the six segments S15-0 to S15-6 at the center out of the 13 segments.

Fig. 2 (d) illustrates a spectrum of the IF signal outputted from the BPF 23 in the case of partial receiving. In the case of partial receiving, only the spectrum corresponding to the one segment which is a partial receiving object (hereinafter referred to as a partial receiving object segment) S15-0 at the center in the spectrum of the IF signal corresponding to the UHF Channel 15 is extracted by the BPF 23.

Fig. 2 (e) illustrates a spectrum of a Low IF signal outputted from the mixer 24 or 25 at the time of partial receiving.

Description was made of a so-called super heterodyne system for converting an RF signal into an IF signal once and then, converting the IF signal into a Low IF signal as a receiving system. In a single carrier transmission system such as QPSK modulation, a direct conversion system for directly converting an RF signal into a base band signal is also used as another receiving system. In the direct conversion system, the necessity of components such as the band-path filter 23 generally realized by an SAW (Surface Acoustic Wave) filter is eliminated, thereby making it possible to reduce the number of components.

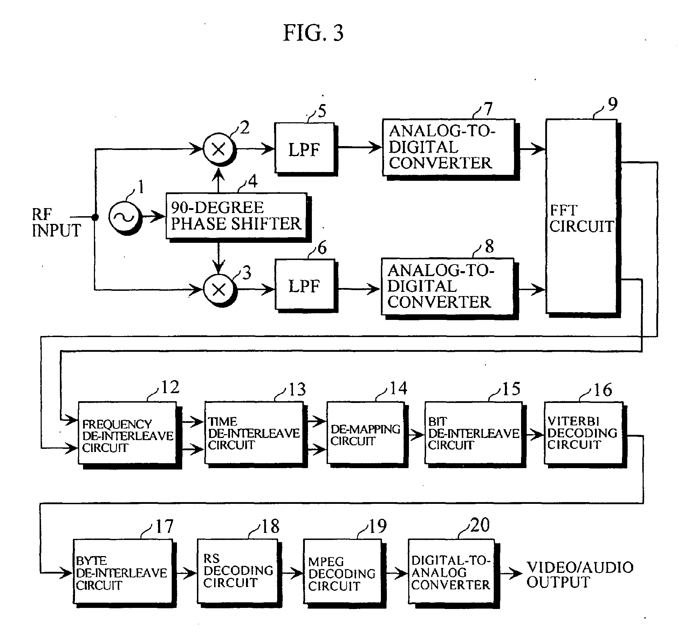

Fig. 3 illustrates the configuration of a conventional receiver using a direct conversion system. In Fig. 3, the same blocks as those shown in Fig. 1 are assigned the same reference numerals and hence, the description thereof is not repeated. The difference between the conventional receiver using a direct conversion system and the receiver using a super heterodyne system shown in Fig. 1 is as follows:

(1) The circuit (the mixer 21, the local signal generator 22, the BPF 23, the local signal generator 26, the mixers 24 and 25, and the 90-degree phase shifter 27) for converting an RF signal into an IF signal and further converting the IF signal into a Low IF signal is eliminated.
(2) A down converter (a local signal generator 1, mixers 2 and 3, and a 90-degree phase shifter 4) for frequency-converting an RF signal and LPFs 5 and 6 are added such that the center frequency of the occupied band of a partial receiving object segment is a frequency of zero (a DC component).

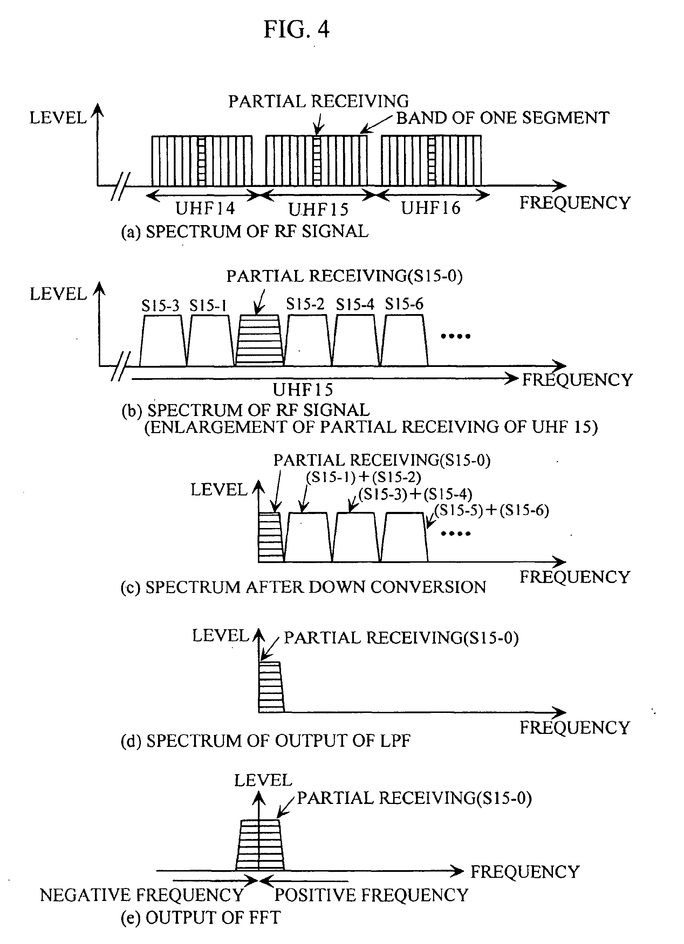

Fig. 4 illustrates a spectrum in each of the units shown in Fig. 3.

Fig. 4 (a) illustrates.a spectrum of an RF signal corresponding to terrestrial digital broadcasting (UHF).

Fig. 4 (b) is an enlarged view of the UHF Channel 15, which illustrates, taking a partial receiving object segment as S15-0 and taking segments in the lower and upper bands than the partial receiving object segment as S15-1 to S15-12, the segments S15-0 to S15-6.

Fig. 4 (c) illustrates a spectrum after the frequency conversion by the down converter (the local signal generator 1, the mixers 2 and 3, and the 90-degree phase shifter 4). The down converter frequency-converts the RF signal such that the center frequency of the occupied band of the partial receiving object segment S15-0 is a frequency of zero (a DC component). Accordingly, the RF signal is folded back at a frequency which is one-half the occupied band of the partial receiving object segment S15-0, and the folded signal is multiplexed.

Fig. 4 (d) illustrates a spectrum after removal of frequency components (unnecessary components) higher than the partial receiving object segment S15-0 by the LPFs 5 and 6.

Fig. 4 (e) illustrates a spectrum after transformation from time axis data to frequency axis data in an FFT circuit 9, where only a signal corresponding to the partial receiving object segment S15-0 is obtained.

In the conventional receiver using a direct conversion system, the unnecessary components other than the partial receiving object segment S15-0 are removed by the LPFs 5 and 6. Accordingly, an analog filter having steep characteristics is required as the LPFs 5 and 6. An object of the present invention is to provide a direct conversion receiver that eliminates the necessity of using a steep analog filter so as to remove an unnecessary component other than a receiving object segment.

Another object of the present invention is to provide, in a direct conversion receiver for frequency-converting an RF signal such that the center frequency of the occupied band is a frequency of zero (a DC component), a direct conversion receiver in which high-precision DC offset correction is possible in a simple configuration.

A further object of the present invention is to provide a direct conversion receiver capable of reducing the circuit scale.

Disclosure of Invention

A first direct conversion receiver according to the present invention is characterized by comprising a down converter for frequency-converting an analog RF signal modulated by an OFDM method such that the center frequency of the occupied band of a segment which is a receiving object (hereinafter referred to as a receiving object segment) is a frequency of zero; AD conversion means for converting a down converted signal obtained by the down converter into a digital signal; FFT means for subjecting the signal obtained by the AD conversion means to fast Fourier transform, to transform the signal from time axis data to frequency axis data; and unnecessary component removal means for removing from an output signal of the FFT means an unnecessary component other than the receiving object segment.

A second direct conversion receiver according to the present invention is characterized by comprising a down converter for frequency-converting an analog RF signal modulated by an OFDM method such that the center frequency of the occupied band of a receiving object segment is a frequency of zero; filter means for removing a high-frequency component from a down converted signal obtained by the down converter; AD conversion means for converting an output signal of the filter means into a digital signal; FFT means for subjecting the signal obtained by the AD conversion means to fast Fourier transform; and unnecessary component removal means for removing from an output signal of the FFT means an unnecessary component other than the receiving object segment.

It is preferable that the above-mentioned first or second direct conversion receiver is provided with DC offset detection means for detecting a DC offset amount from a DC component after the fast Fourier transform carried out by the FFT means, and DC offset correction means for correcting DC offset on the basis of the DC offset amount detected by the DC offset detection means.

An example of the DC offset detection means is one for integrating the DC component after the fast Fourier transform carried out by the FFT means for a predetermined time period, and taking an obtained integrated value as an offset amount.

An example of the DC offset detection means is one comprising difference means having a plurality of reference values and calculating and outputting a difference value between the DC component after the fast Fourier transform carried out by the FFT means and each of the reference values, comparison means for selecting and outputting the minimum value of the difference values calculated by the difference means, and integration means for integrating the difference value outputted by the comparison means for a predetermined time period and outputting an obtained integrated value as an offset amount.

A third direct conversion receiver according to the present invention is characterized by comprising a down converter for frequency-converting an analog RF signal modulated by an OFDM method such that the upper-end frequency or the lower-end frequency of the occupied band of a receiving object segment is in the vicinity of a frequency of zero; AD cohversion means for converting a down converted signal obtained by the down converter into a digital signal; FFT means for subjecting the signal obtained by the AD conversion means to fast Fourier transform, to transform the signal from time axis data to frequency axis data; and unnecessary component removal means for removing from an output signal of the FFT means an unnecessary component other than the receiving object segment.

A fourth direct conversion receiver according to the present invention is characterized by comprising a down converter for frequency-converting an analog RF signal modulated by an OFDM method such that the upper-end frequency or the lower-end frequency of the occupied band of a receiving object segment is in the vicinity of a frequency of zero; filter means for removing a high-frequency component from a down converted signal obtained by the down converter; AD conversion means for converting an output signal of the filter means into a digital signal; FFT means for subjecting the signal obtained by the AD conversion means to fast Fourier transform, to transform the signal from time axis data to frequency axis data; and unnecessary component removal means for removing from an output signal of the FFT means an unnecessary component other than the receiving object segment.

Brief Description of Drawings

Fig. 1 is a block diagram showing the configuration of a conventional digital television receiver using a super heterodyne system.

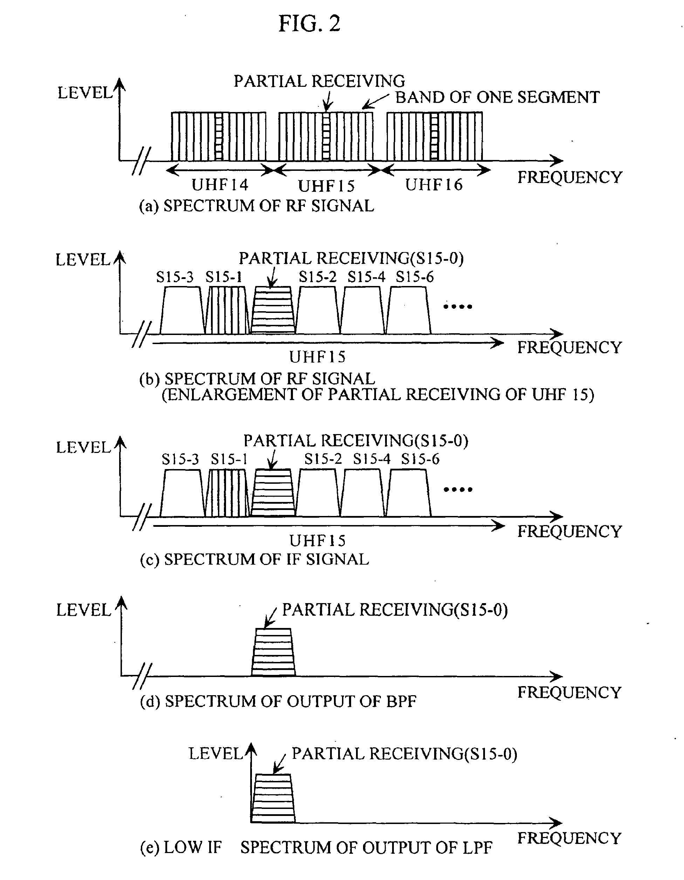

Fig. 2 is a schematic view showing a spectrum in each of blocks shown in Fig. 1.
Fig. 3 is a block diagram showing the configuration of a conventional digital television receiver using a direct conversion system.
Fig. 4 is a schematic view showing a spectrum in each of blocks shown in Fig. 3.

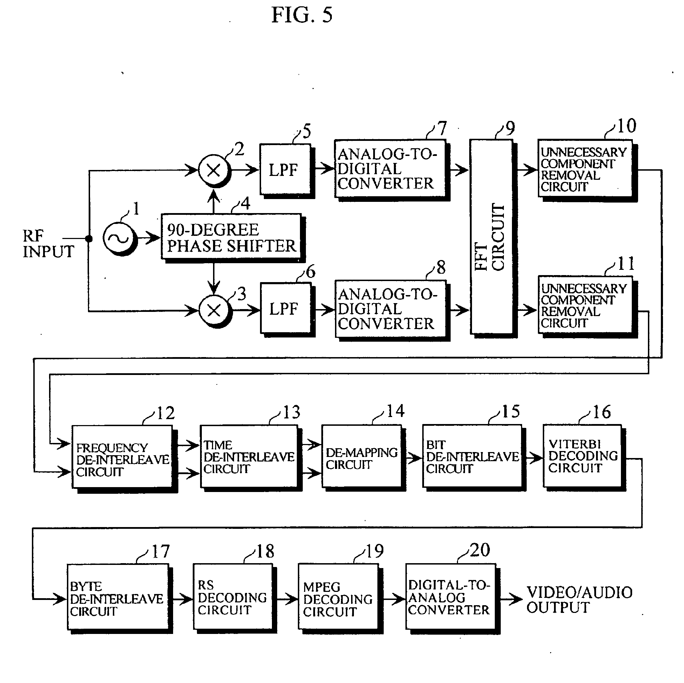

Fig. 5 is a block diagram showing the configuration of a digital television receiver,using a direct conversion system

EP 1 441 457 A1

according to an embodiment (a first embodiment) of the present invention.

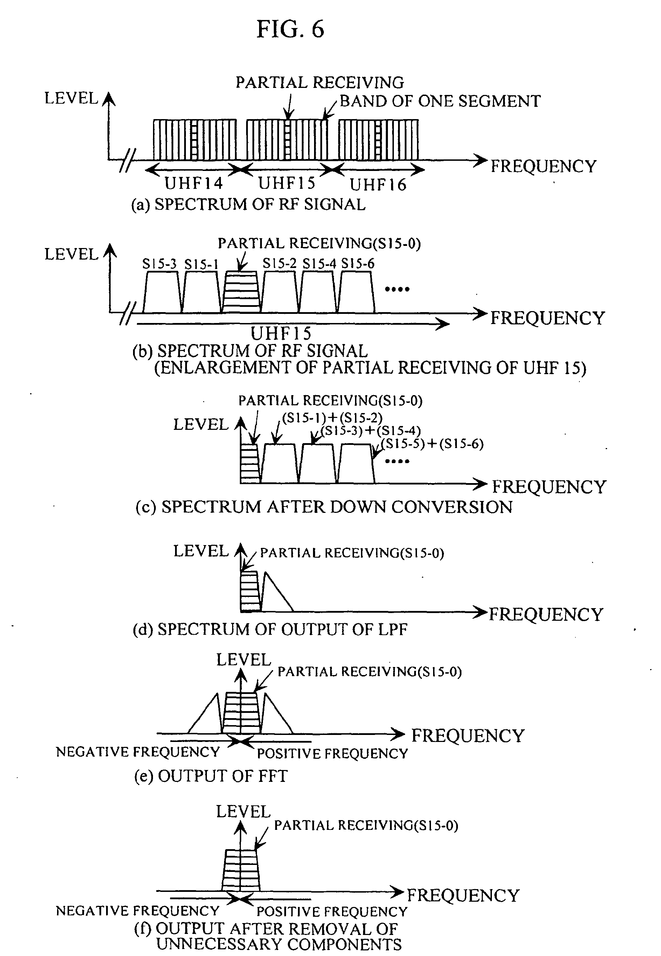

Fig. 6 is a schematic view showing a spectrum in each of blocks shown in Fig. 5.

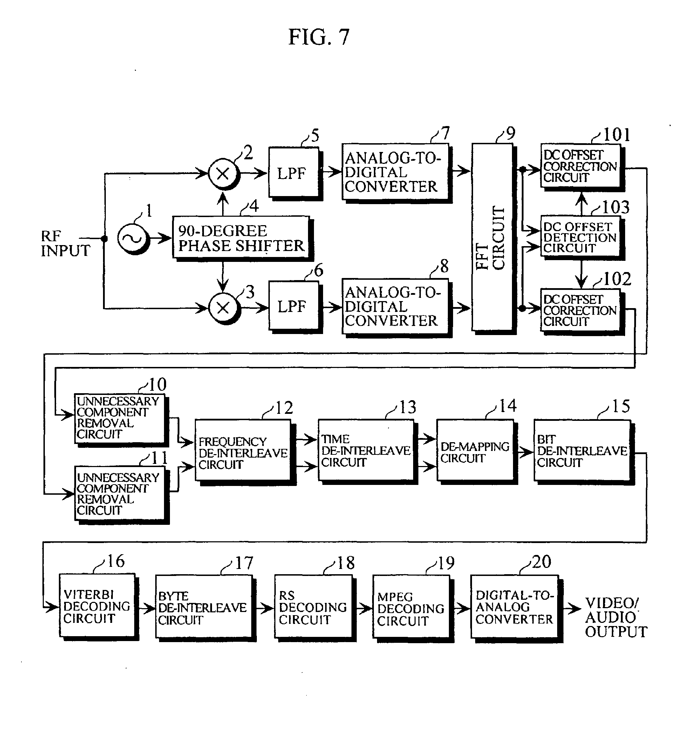

Fig. 7 is a block diagram showing the configuration of a digital television receiver according to an embodiment (a second embodiment) of the present invention.

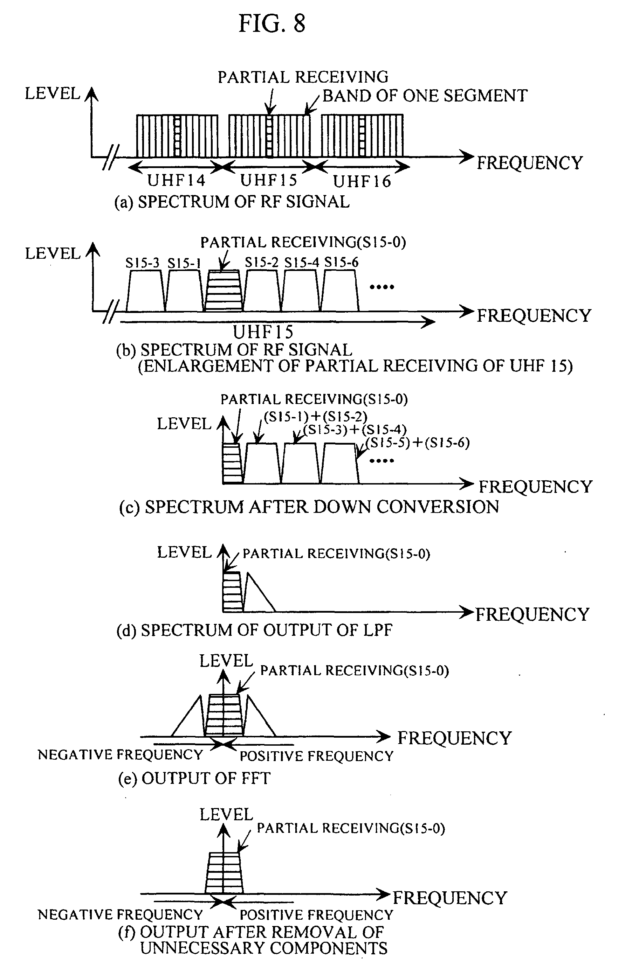

Fig. 8 is a schematic view showing a spectrum in each of blocks shown in Fig. 7.

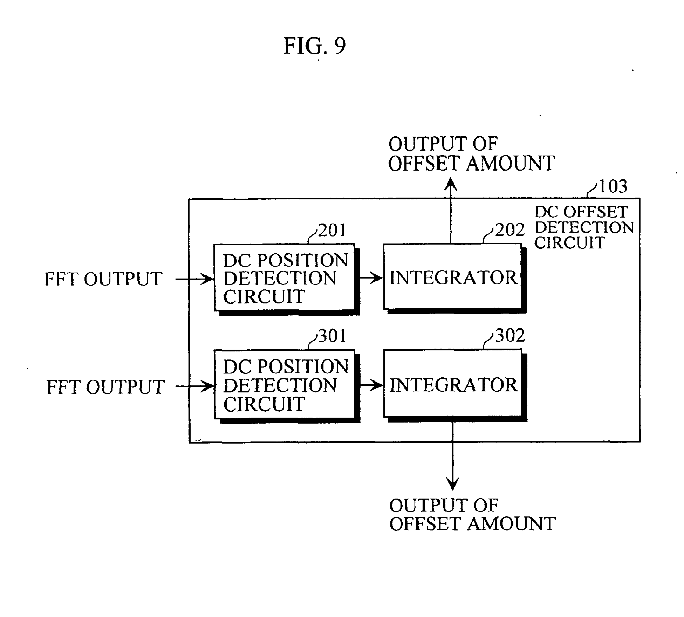

Fig. 9 is a block diagram showing the configuration of a DC offset detection circuit 103.

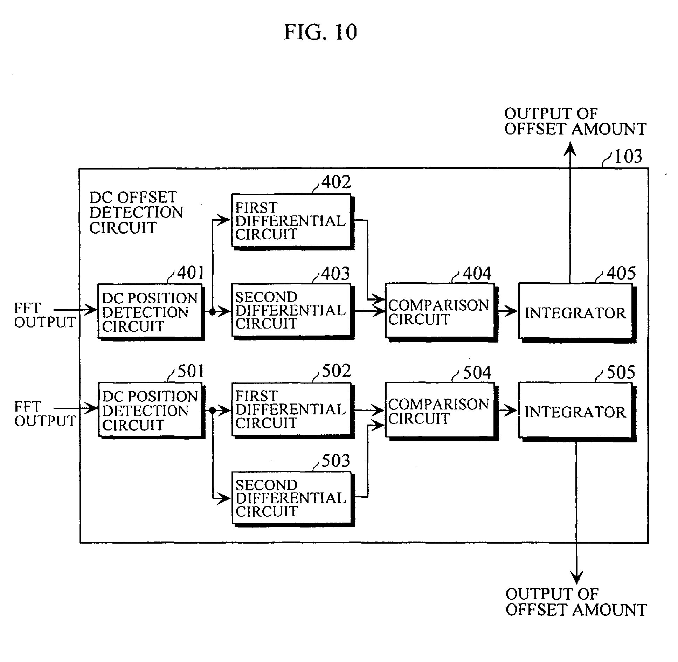

Fig. 10 is a block diagram showing the other configuration of the DC offset detection circuit 103.

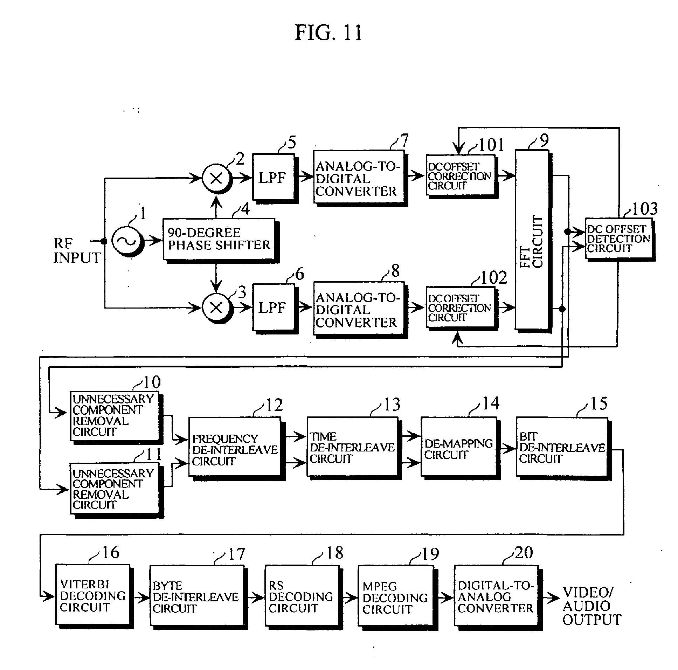

Fig. 11 is a block diagram showing the other configuration of the digital television receiver.

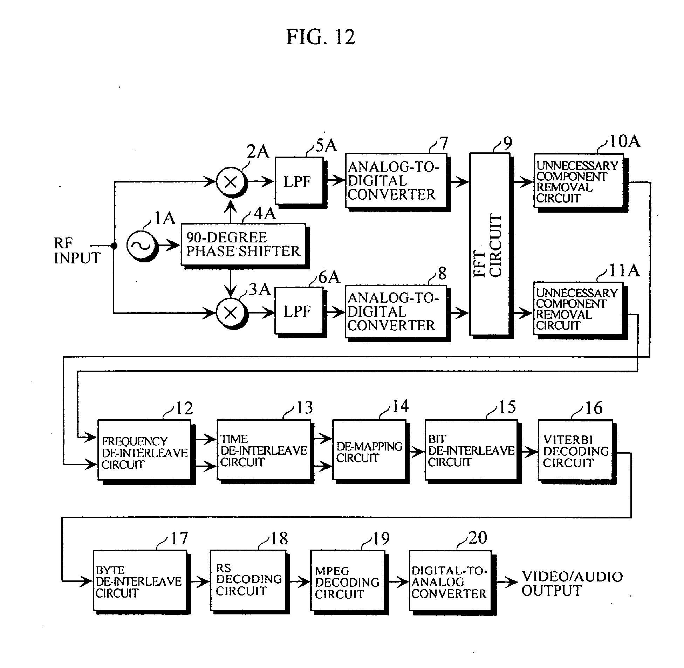

Fig. 12 is a block diagram showing the configuration of a digital television receiver according to an embodiment (a third embodiment) of the present invention.

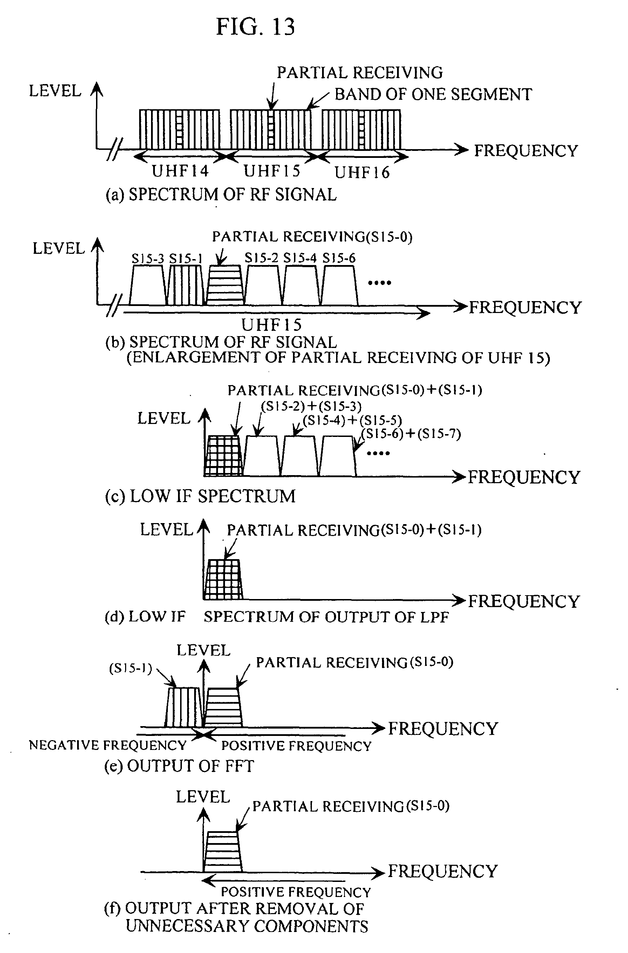

Fig. 13 is a schematic view showing a spectrum in each of blocks shown in Fig. 12.


Best Mode for Carrying out the Invention

[1] Description of First Embodiment

Referring now to Figs. 5 and 6, a first embodiment of the present invention will be described.
Fig. 5 illustrates the configuration of a digital television receiver for performing partial receiving. Fig. 6 illustrates a spectrum in each of blocks shown in Fig. 5.
In Fig. 5, the same blocks as those shown in Fig. 3 are assigned same reference numerals and hence, the description thereof is not repeated. The difference between the receiver shown in Fig. 5 and the conventional example shown in Fig. 3 is as follows.

(1) An analog filter having gentler characteristics, as compared with those in the conventional example, is used as LPFs 5 and 6.
(2) Unnecessary component removal circuits 10 and 11 are added.

In Japanese terrestrial digital TV broadcasting, a signal is transmitted by a spectrum as illustrated in Fig. 6 (a). In Fig. 6 (a), a spectrum corresponding to UHF Channels 14 to 16 is illustrated. One channel has a band width of 6 HMz, and is composed of 13 segments. The segment at the center out of the 13 segments corresponds to a signal for partial receiving, by which partial receiving is possible. Description is made of a case where the UHF Channel 15 is partially received.
Fig. 6 (b) is an enlarged view of the UHF Channel 15, which illustrates, taking a segment which is a partial. receiving object (hereinafter referred to as a partial receiving object segment) as S15-0 and taking segments in the lower and upper bands than the partial receiving object segment as S15-1 to S15-12, the segments S15-0 to S15-6.
An RF signal corresponding to the UHF Channel 15 is frequency-converted by a down converter (a local signal generator 1, a 90-degree phase shifter 4, and mixers 2 and 3) shown in Fig. 5. A signal having a frequency for frequency-converting the RF signal is outputted from the local signal generator 1 such that the center frequency of the occupied band of the partial receiving object segment S15-0 becomes a frequency of zero. Further, a cosine signal and a sine signal are respectively outputted to the mixers 2 and 3 from the 90-degree phase shifter 4 so as to output a real axis component and an imaginary axis component.
A spectrum after the frequency conversion by the down converter is as illustrated in Fig. 6 (c). The down converter frequency-converts the RF signal such that the center frequency of the occupied band of the partial receiving object segment S15-0 becomes a frequency of zero (a DC component). Accordingly, the RF signal is folded back at a frequency which is one-half the occupied band of the partial receiving object segment S15-0, and the folded signal is multiplexed.
Harmonic components of the signal are respectively removed by the LPFs 5 and 6. A spectrum of output signals after the removal of the harmonic components by the LPFs 5 and 6 is as illustrated in Fig. 6 (d). An analog filter having gentler characteristics, as compared with those in the conventional example, is used as the LPFs 5 and 6. In the spectrum of the output signals after the removal of the harmonic components by the LPFs 5 and 6, therefore, not only the partial receiving object segment S15-0 but also the segments S15-1 and S15-2 adjacent thereto remain.
The signals are transformed from time axis data to frequency axis data in an FFT circuit 9. A spectrum of output signals of the FFT circuit 9 is as illustrated in Fig. 6 (e).
The output signals of the FFT circuit 9 are outputted to a frequency de-interleave circuit 12 after the segments S15-1 to S15-2 which are unnecessary components other than the partial receiving object segment S15-0 are respectively removed therefrom in the unnecessary component removal circuits 10 and 11. Consequently, a spectrum of the output signals of the unnecessary component removal circuits 10 and 11 is only the partial receiving object segment S15-0, as illustrated in Fig. 6 (f). Signal processing in the succeeding stage of the frequency de-interleave circuit 12 is the same as that in the receiver shown in Fig. 1.

For reference, the principle upon which folded signal components of the partial receiving object segment S15-0 can be separated by the FFT circuit 9 will be described.

For simplicity, if it is assumed that the center frequency of the partial receiving object segment S15-0 is wc, and carriers respectively exist in portions spaced $\pm \alpha$ above and below wc, a signal S0 corresponding to the segment S15-0 is expressed by the following equation (1):

$$S0=A*cos((wc+\alpha)t) + B*sin((wc-\alpha)t)) \tag{1}$$

Here, A to B denote the amplitudes of the signal.

The signal is multiplied by cos (wct) and sin (wct) so as to convert a real axis component I and an imaginary axis component Q of the RF signal into DCs, and its harmonic components are then removed (a coefficient 1/2 is omitted), the real axis component I is expressed'by the following equation (2), and the imaginary axis component Q is expressed by the following equation (3):

$$I=A*cos(\alpha t) + B*sin(-\alpha t) \tag{2}$$

$$Q=A*sin (-\alpha t) + B*cos (\alpha t) \tag{3}$$

In order to subject the signal to FFT, the signal is multiplied by $cos(-\alpha t) - jsin(-\alpha t)$ and integrated for one period, to obtain A, while being multiplied by $cos(\alpha t) - jsin(\alpha t)$ and integrated for one period, to obtain B. Accordingly, a positive frequency component and a negative frequency component can be completely separated from each other.

According to the above-mentioned first embodiment, the necessity of using a steep analog filter so as to remove unnecessary components other than the receiving object segment is eliminated.

[2] Description of Second Embodiment

Referring now to Figs. 7 and 11, a second embodiment of the present invention will be described.

Fig. 7 illustrates the configuration of a digital television receiver using a direct conversion system. Fig. 8 illustrates a spectrum in each of blocks shown in Fig. 7.

In Fig. 7, the same blocks as those shown in Fig. 5 are assigned same reference numerals and hence, the description thereof is not repeated. The difference between the receiver shown in Fig. 7 and the receiver shown in Fig. 5 is that DC offset correction circuits 101 to 102 and a DC offset detection circuit 103 are added.

In Japanese terrestrial digital TV broadcasting, a signal is transmitted by a spectrum as illustrated in Fig. 8 (a). In Fig. 8 (a), a spectrum corresponding to UHF Channels 14 to 16 is illustrated. One channel has a band width of 6 HMz, and is composed of 13 segments. The segment at the center out of the segments corresponds to a signal for partial receiving. Description is made of a case where the UHF Channel 15 is partially received.

Fig. 8 (b) is an enlarged view of the UHF Channel 15, which illustrates, taking a partial receiving object segment as S15-0 and taking segments in the lower and upper bands than the partial receiving object segment as S15-1 to S15-12, the segments S15-0 to S15-6.

An RF signal corresponding to the UHF Channel 15 is frequency-converted by a down converter (a local signal generator 1, a 90-degree phase shifter 4, and mixers 2 and 3) shown in Fig. 7. A signal having a frequency for frequency-converting the RF signal is outputted from the local signal generator 1 such that the center frequency of the occupied band of the partial receiving object segment S15-0 becomes a frequency of zero. Further, a cosine signal and a sine signal are respectively outputted to the mixers 2 and 3 from the 90-degree phase shifter 4 so as to output a real axis component and an imaginary axis component.

A spectrum after the frequency conversion by the down converter is as illustrated in Fig. 8 (c). The down converter frequency-converts the RF signal such that the center frequency of the occupied band of the partial receiving object segment S15-0 is a frequency of zero (a DC component). Accordingly, the RF signal is folded back at a frequency which is one-half the occupied band of the partial receiving object segment S15-0, and the folded signal is multiplexed.

Harmonic components of the signal are respectively removed by the LPFs 5 and 6. A spectrum of output signals after the removal of the harmonic components by the LPFs 5 and 6 is as illustrated in Fig. 8 (d). An analog filter having relatively gentle characteristics is used as the LPFs 5 and 6. In the spectrum of the output signals after the removal of the harmonic components by the LPFs 5 and 6, therefore, not only the partial receiving object segment S15-0 but also the segments S15-1 and S15-2 adjacent thereto remain.

The signals are transformed from time axis data to frequency axis data in an FFT circuit 9. A spectrum of output signals of the FFT circuit 9 is as illustrated in Fig. 8 (e).

The output signals of the FFT circuit 9 are outputted to a frequency de-interleave circuit 12 after the segments S15-1 and S15-2 which are unnecessary components other than the partial receiving object segment S15-0 are respectively removed therefrom in the unnecessary component removal circuits 10 and 11. Consequently, a spectrum of output signals of the unnecessary component removal circuits 10 and 11 is only the partial receiving object segment S15-0, as illustrated in Fig. 8 (f). Signal processing in the succeeding stage of the frequency de-interleave circuit 12 is the same as that in the receiver shown in Fig. 1.

As in the spectrum shown in Fig. 8 (c), a DC component (a component having a frequency of zero) is also a signal component, so that a signal having no DC offset is required. Examples of the cause of DC offset include DC offset of an active element in a case where the mixers 2 and 3 and the LPFs 5 and 6 are active filters, analog-to-digital conversion circuits 7 and 8, and so on.

In the receiver shown in Fig. 7, outputs after the FFT in the FFT circuit 9 are inputted to the DC offset detection circuit 103, and outputs of the DC offset detection circuit 103 are respectively inputted to the DC offset correction circuits 101 and 102. In the DC offset correction circuits 101 and 102, a value at the time of DC output of the FFT circuit 9 is corrected depending on a DC offset amount in the DC offset detection circuit 103.

Fig. 9 illustrates the configuration of the DC offset detection circuit 103.

Generally, signal data are nearly randomized in transmission signal processing. Therefore, a signal component becomes a predetermined value when it is integrated for a predetermined time period. The DC offset detection circuit 103 utilizes the property, to integrate a DC component of the output of the FFT circuit 9 for a predetermined time period and take the results of the integration as a DC offset amount.

The DC offset detection circuit 103 shown in Fig. 9 comprises a first circuit (a DC position detection circuit 201 and an integrator 202) for providing an offset amount to the one DC offset correction circuit 101, and a second circuit (a DC position detection circuit 301 and an integrator 302) for providing an offset amount to the other DC offset correction circuit 102.

The operations of both the circuits are the same and hence, only the operation of the first circuit will be described. The DC position detection circuit 201, to which one of the signals outputted from the FFT circuit 9 is inputted, detects the level of a DC position. The integrator 202 integrates the level of the DC position detected by the DC position detection circuit 201 for a predetermined time period, and outputs the results of the integration as an offset amount.

Fig. 10 illustrates another example of the configuration of the DC offset detection circuit 103.

When a signal component takes a value of + 1 or - 1, outputs of the FFT circuit 9 are $+ 1 + \alpha$ or $- 1 + \alpha$, letting $\alpha$ be the value of DC offset.

For example, when the output is $+ 1 + \alpha$, one is respectively added and subtracted to and from the value, to obtain $2 + \alpha$ and $\alpha$. The value, close to zero, out of the values, i.e. , $\alpha$ is a DC offset amount. Similarly, when the output is $- 1 + \alpha$, one is respectively added and subtracted to and from the value, to obtain $\alpha$ and $- 2 + \alpha$. The value, close to zero, out of the values, i.e. , $\alpha$ is a DC offset amount. A presumed signal value is thus subtracted from the output of the FFT circuit 9, to take, out of obtained values, the value close to zero as a DC offset amount.

The DC offset detection circuit 103 shown in Fig. 10 comprises a first circuit (a DC position detection circuit 401, a first differential circuit 402, a second differential circuit 403, a comparison circuit 404, and an integrator 405) for providing an offset amount to the one DC offset correction circuit 101, and a second circuit (a DC position detection circuit 501, a first differential circuit 502, a second differential circuit 503, a comparison circuit 504, and an integrator 505) for providing an offset amount to the other DC offset correction circuit 102.

The operations of both the circuits are the same and hence, only the operation of the first circuit will be described. The DC position detection circuit 401, to which one of the signals outputted from the FFT circuit 9 is inputted, detects the level of a DC position. An output X of the DC position detection circuit 401 is $+ 1 + \alpha$ or $- 1 + \alpha$.

The first differential circuit 402 subtracts - 1 from the output X of the DC position detection circuit 401 (adds + 1 thereto). An output value of the first differential circuit 402 is X + 1. The second differential circuit 403 subtracts + 1 from the output X of the DC position detection circuit 401. An output value of the second differential circuit 403 is X - 1.

The comparison circuit 404 compares the output value (X + 1) of the first differential circuit 402 with the output value (X - 1) of the second differential circuit 403, and selects and outputs the smaller output value $\alpha$. The integrator 405 integrates the output of the comparison circuit 404 for a predetermined time period, and outputs the results of the integration as an offset amount.

Although in the above-mentioned embodiment, the DC offset correction circuits 101 and 102 are provided in the succeeding stage of the FFT circuit 9, the DC offset correction circuits 101 and 102 may be provided in the preceding stage of the FFT circuit 9, as illustrated in Fig. 11. In a case where the DC offset correction circuits 101 and 102 are provided in the preceding stage of the FFT circuit 9, correction is made before the FFT. Accordingly, the dynamic range of the FFT can be sufficiently made use of. However, a correction delay corresponding to a time period required for the FFT occurs.

**EP 1 441 457 A1**

According to the present embodiment, high-precision DC offset correction can be made in a simple configuration.

[3] Description of Third Embodiment

Referring now to Figs. 12 and 13, a third embodiment of the present invention will be described.

Fig. 12 illustrates the configuration of a digital television receiver for performing partial receiving. Fig. 13 illustrates a spectrum in each of blocks shown in Fig. 12.

In Fig. 12, the same blocks as those shown in Fig. 1 are assigned same reference numerals and hence, the description thereof is not repeated. The difference between the receiver shown in Fig. 12 and the conventional example shown in Fig. 1 is as follows.

(1) The circuit (the mixer 21, the local signal generator 22, the BPF 23, the local signal generator 26, the mixers 24 and 25, and the 90-degree phase shifter 27) for converting an RF signal into an IF signal and further converting the IF signal into a Low IF signal is eliminated.

(2) A down converter for directly converting an RF signal into a Low IF signal, that is, a down converter (a local signal generator 1A, mixers 2A and 3A, and a 90-degree phase shifter 4A) for frequency-converting an RF signal such that the lower-end frequency (or the upper-end frequency) of the occupied band of a partial receiving object segment is in the vicinity of a frequency of zero, and LPFs 5A and 6A are added.

(3) Unnecessary component removal circuits 10A and 11A are added.

In Japanese terrestrial digital TV broadcasting, a signal is transmitted by a spectrum as illustrated in Fig. 13 (a). In Fig. 13 (a), a spectrum corresponding to UHF Channels 14 to 16 is illustrated. One channel has a band width of 6 HMz, and is composed of 13 segments. The segment at the center out of the 13 segments corresponds to a signal for partial receiving, by which partial receiving is possible. Description is made of a case where the UHF Channel 15 is partially received.

Fig. 13 (b) is an enlarged view of the UHF Channel 15, which illustrates, taking a partial receiving object segment as S15-0 and taking segments in the lower and upper bands than the partial receiving object segment as S15-1 to S15-12, the segments S15-0 to S15-6.

An RF signal corresponding to the UHF Channel 15 is frequency-converted into a Low IF signal by the down converter (the local signal generator 1, the mixers 2A and 3A, and the 90-degree phase shifter 4A) shown in Fig. 12. A signal having a frequency (for frequency-converting the RF signal such that the lower-end frequency of the occupied band of the partial receiving object segment S15-0 is in the vicinity of a frequency of zero) such that the partial receiving object segment S15-0 corresponds to the Low IF signal is outputted from the local signal generator 1A. Further, a cosine signal and a sine signal are respectively outputted to the mixers 2A and 3A from the 90-degree phase shifter 4 so as to output a real axis component and an imaginary axis component.

A spectrum after the frequency conversion by the down converter is as illustrated in Fig. 13 (c). The down converter frequency-converts the RF signal such that the lower-end frequency of the occupied band of the partial receiving object segment S15-0 is in the vicinity of a frequency of zero. Accordingly, the segment S15-1 whose component is folded back is multiplexed in a frequency band of the partial receiving object segment S15-0.

Similarly, the segments S15-2 and S15-3 are overlapped with each other, and the segments S15-4 and S15-5 are overlapped with each other. Harmonic components of the signal are respectively removed by the LPFs 5A and 6A. A spectrum of output signals after the removal of the harmonic components by the LPFs 5A and 6A is as illustrated in Fig. 13 (d).

The signals are transformed from time axis data to frequency axis data in an FFT circuit 9. The number of points of the FFT circuit 9 must be twice or more in order to separate signals corresponding to two segments. Further, the segments in the UHF Channel 15 must have orthogonality. Accordingly, orthogonality is also maintained from the partial receiving object segment S15-0 and the segment S15-1. Therefore, a negative frequency component of the segment S15-1 and a positive frequency component of the partial receiving object segment S15-0 are completely separable from each other in the FFT circuit 9. A spectrum of outputs of the FFT circuit 9 is as illustrated in Fig. 13 (e).

The segment 15-1 having a negative frequency component is removed from the outputs of the FFT circuit 9, respectively, by the unnecessary component removal circuits 10A and 11A, and obtained signals are outputted to a frequency de-interleave circuit 12. Consequently, a spectrum of the output signals of the unnecessary component removal circuits 10A and 11A is only the partial receiving object segment S15-0, as illustrated in Fig. 13 (f). Signal processing in the succeeding stage of the frequency de-interleave circuit 12 is the same as that in the receiver shown in Fig. 1.

For reference, the principle upon which the negative frequency component can be detected by the FFT circuit 9 will be described.

For simplicity, it is assumed that carriers respectively exist in the partial receiving object segment S15-0 and the segment S15-1, and signals respectively corresponding to the segments are S0 and S1 expressed by the following equations (4) and (5):

$$S 0=A*\cos((wc+\alpha)t) + B*\sin((wc+\alpha)t)) \tag{4}$$

$$S 1=C*\cos((wc-\alpha)t) + D*\sin((wc-\alpha)t)) \tag{5}$$

Let A to D be the amplitudes of the signals, and wc be a frequency at the boundary between the partial receiving object segment S15-0 and the segment S15-1. Consequently, the RF signal is expressed by the following equation (6):

$$RF=A*\cos((wc+\alpha)t) + B*\sin((wc+\alpha)t))$$
$$+ C*\cos((wc-\alpha)t) + D*\sin((wc-\alpha)t)) \tag{6}$$

The RF signal is multiplied by cos (wct) and sin (wct) so as to convert the RF signal into a Low IF signal having a real axis component I and an imaginary axis component Q, and its harmonic components are then removed (a coefficient 1/2 is omitted), the real axis component I is expressed by the following equation (7) , and the imaginary axis component Q is expressed by the following equation (8):

$$I=A*\cos(\alpha t) + B*\sin(\alpha t) + C*\cos(-\alpha t) + D*\sin(-\alpha t) \tag{7}$$

$$Q=A*\sin(-\alpha t) + B*\cos(\alpha t) + C*\sin(\alpha t) + D*\cos(\alpha t) \tag{8}$$

In order to subject the signal to FFT, the signal is multiplied by cos(-αt) -jsin(-αt) and integrated for one period, to obtain A + jB, while being multiplied by cos(α t) - jsin(αt) and integrated for one period, to obtain C + jD. Accordingly, positive frequency components and negative frequency components can be completely separated from each other.
In order to simplify the description, the carriers in the partial receiving object segment S15-0 and the segment S15-1 are respectively defined as in the equations (4) and (5). Although the plus and minus signs of the frequency are reversed in the case of the FFT, therefore, this is not an essential problem.
According to the above-mentioned embodiment, an analog IF filter generally realized by an SAW filter can be reduced, thereby making it possible to reduce the cost of the receiver.

**Claims**

1. A direct conversion receiver **characterized by** comprising:

    a down converter for frequency-converting an analog RF signal modulated by an OFDM method such that the center frequency of the occupied band of a receiving object segment is a frequency of zero;
    AD conversion means for converting a down converted signal obtained by the down converter into a digital signal;
    FFT means for subjecting the signal obtained by the AD conversion means to fast Fourier transform, to transform the signal from time axis data to frequency axis data; and
    unnecessary component removal means for removing from an output signal of the FFT means an unnecessary component other than the receiving object segment.

2. A direct conversion receiver **characterized by** comprising:

    a down converter for frequency-converting an analog RF signal modulated by an OFDM method such that the center frequency of the occupied band of a receiving object segment is a frequency of zero;
    filter means for removing a high-frequency component from a down converted signal obtained by the down converter;

AD conversion means for converting an output signal of the filter means into a digital signal;

FFT means for subjecting the signal obtained by the AD conversion means to fast Fourier transform; and

unnecessary component removal means for removing from an output signal of the FFT means an unnecessary component other than the receiving object segment.

3. The direct conversion receiver according to either one of claims 1 and 2, **characterized by** comprising DC offset detection means for detecting a DC offset amount from a DC component after the fast Fourier transform carried out by the FFT means, and DC offset correction means for correcting DC offset on the basis of the DC offset amount detected by the DC offset detection means.

4. The direct conversion receiver according to claim 3, **characterized in that** the DC offset detection means integrates the DC component after the fast Fourier transform carried out by the FFT means for a predetermined time period, and takes an obtained integrated value as an offset amount.

5. The direct conversion receiver according to claim 3, **characterized in that** the DC offset detection means comprises difference means having a plurality of reference values and calculating and outputting a difference value between the DC component after the fast Fourier transform carried out by the FFT means and each of the reference values, comparison means for selecting and outputting the minimum value of the difference values calculated by the difference means, and integration means for integrating the difference value outputted by the comparison means for a predetermined time period and outputting an obtained integrated value as an offset amount.

6. A direct conversion receiver **characterized by** comprising:

a down converter for frequency-converting an analog RF signal modulated by an OFDM method such that the upper-end frequency or the lower-end frequency of the occupied band of a receiving object segment is in the vicinity of a frequency of zero;

AD conversion means for converting a down converted signal obtained by the down converter into a digital signal;

FFT means for subjecting the signal obtained by the AD conversion means to fast Fourier transform, to transform the signal from time axis data to frequency axis data; and

unnecessary component removal means for removing from an output signal of the FFT means an unnecessary component other than the receiving object segment.

7. A direct conversion receiver **characterized by** comprising:

a down converter for frequency-converting an analog RF signal modulated by an OFDM method such that the upper-end frequency or the lower-end frequency of the occupied band of a receiving object segment is in the vicinity of a frequency of zero;

filter means for removing a high-frequency component from a down converted signal obtained by the down converter;

AD conversion means for converting an output signal of the filter means into a digital signal;

FFT means for subjecting the signal obtained by the AD conversion means to fast Fourier transform, to transform the signal from time axis data to frequency axis data; and

unnecessary component removal means for removing from an output signal of the FFT means an unnecessary component other than the receiving object segment.

**Amended claims under Art. 19.1 PCT**

1. (Amended) A direct conversion receiver, **characterized by** comprising:

a down converter for frequency-converting an analog RF signal modulated by an OFDM method such that any one of frequencies in the occupied band of a receiving object segment is a frequency of zero;

filter means for passing parts or all of the receiving object segment after said frequency conversion which exists in a down converted signal obtained by said down converter and segments adjacent to the receiving object segment after said frequency conversion;

AD conversion means for converting an output of said filter means into a digital signal;

FFT means for subjecting an output of said AD conversion means to fast Fourier transform, to transform the output from time axis data to frequency axis data, and separating its frequency into a negative component and a positive component; and

unnecessary component removal means for removing from an output of said FFT means a segment component adjacent to the receiving object segment after said frequency conversion.

**2.** (canceled)

**3.** (canceled)

**4.** (canceled)

**5.** (Amended) The direct conversion receiver according to claim 1, **characterized by** comprising DC offset detection means for detecting a DC offset amount from a DC component after the fast Fourier transform carried out by the FFT means, and DC offset correction means for correcting DC offset on the basis of the DC offset amount detected by said DC offset detection means, said DC offset detection means comprising differential means having a plurality of reference values and calculating and outputting a difference value between the DC component after the fast Fourier transform carried out by said FFT means and each of the reference values, and comparison means for selecting and outputting the minimum value of the difference values calculated by the differential means and integration means for integrating the difference value outputted by the comparison means for a predetermined time period and outputting an obtained integrated value as an offset amount.

**6.** (Amended) A direct conversion receiver, **characterized by** comprising:

a down converter for frequency-converting an analog RF signal modulated by an OFDM method such that either one of the upper-end frequency and the lower-end frequency of the occupied band of a receiving object segment is in the vicinity of a frequency of zero;

filter means for passing parts or all of the receiving object segment after said frequency conversion which exists in a down converted signal obtained by said down converter and segments adjacent to the receiving object segment after said frequency conversion;

AD conversion means for converting an output of said filter means into a digital signal;

FFT means for subjecting an output of said AD conversion means to fast Fourier transform, to transform the output from time axis data to frequency axis data, and separating its frequency into a negative component and a positive component; and

unnecessary component removal means for removing from an output of said FFT means a segment component adjacent to the receiving object segment after said frequency conversion.

**7.** (canceled)

## Brief Statement under Provision of Article 19 (1)

We hereby amend claims 1 and 6 to clarify that there is provided filter means for passing parts or all of the receiving object segment after the frequency conversion which exists in a down converted signal obtained by the down converter and segments adjacent to the receiving object segment after the frequency conversion.

Amendment to claim 5 is formality amendment made by canceling claim 3.

The cited reference (JP 11-017644 A (Toshiba Corp.)) discloses that an OFDM signal is down-converted and received, is subjected to A/D conversion, and is then subjected to first Fourier Transform (FFT) , to obtain a desired segment from an FFT output.

The cited reference (JP 2001-298437 A (Sony Corp.)) mentions that a desired frequency component is made to zero and does not disclose a specific processing method.

The cited reference (JP 06-326739 A (Sharp Corp.)) discloses a DC offset adjustment circuit 13 which is the same as DC offset correction means described in claims 3 and 4 of the present application.

In the inventions of claims 1 and 6, the respective bandwidths of a desired frequency component and an adjacent frequency component perpendicular thereto are subjected to fast Fourier Transform (FFT), and the adjacent frequency component is then removed. Therefore, a pass band of an LPF may be a band which can pass the desired frequency component and the adjacent frequency component.

This prevents the pass band of the LPF from being so narrow as to adversely affect a desired frequency, and also prevents the pass band of the LPF from being so wide that unnecessary components pass through the LPF over the wide band and that the dynamic range of A/D conversion means is enlarged.

## FIG. 1

# FIG. 2

(a) SPECTRUM OF RF SIGNAL

(b) SPECTRUM OF RF SIGNAL
(ENLARGEMENT OF PARTIAL RECEIVING OF UHF 15)

(c) SPECTRUM OF IF SIGNAL

(d) SPECTRUM OF OUTPUT OF BPF

(e) LOW IF   SPECTRUM OF OUTPUT OF LPF

FIG. 3

# FIG. 4

LEVEL

PARTIAL RECEIVING
BAND OF ONE SEGMENT

UHF14  UHF15  UHF16  FREQUENCY

(a) SPECTRUM OF RF SIGNAL

LEVEL

PARTIAL RECEIVING(S15-0)

S15-3  S15-1  S15-2  S15-4  S15-6

....

UHF15  FREQUENCY

(b) SPECTRUM OF RF SIGNAL
(ENLARGEMENT OF PARTIAL RECEIVING OF UHF 15)

PARTIAL RECEIVING(S15-0)
(S15-1)+(S15-2)
(S15-3)+(S15-4)
(S15-5)+(S15-6)

LEVEL

....

(c) SPECTRUM AFTER DOWN CONVERSION  FREQUENCY

LEVEL  PARTIAL RECEIVING(S15-0)

(d) SPECTRUM OF OUTPUT OF LPF  FREQUENCY

LEVEL

PARTIAL RECEIVING(S15-0)

FREQUENCY

NEGATIVE FREQUENCY  POSITIVE FREQUENCY

(e) OUTPUT OF FFT

FIG. 5

# FIG. 6

PARTIAL RECEIVING
BAND OF ONE SEGMENT

LEVEL

UHF14　UHF15　UHF16

FREQUENCY

(a) SPECTRUM OF RF SIGNAL

PARTIAL RECEIVING(S15-0)

LEVEL

S15-3　S15-1　S15-2　S15-4　S15-6

••••

FREQUENCY

UHF15

(b) SPECTRUM OF RF SIGNAL
(ENLARGEMENT OF PARTIAL RECEIVING OF UHF 15)

PARTIAL RECEIVING(S15-0)
(S15-1)+(S15-2)
(S15-3)+(S15-4)
(S15-5)+(S15-6)

LEVEL

••••

FREQUENCY

(c) SPECTRUM AFTER DOWN CONVERSION

LEVEL　PARTIAL RECEIVING(S15-0)

FREQUENCY

(d) SPECTRUM OF OUTPUT OF LPF

LEVEL
PARTIAL RECEIVING(S15-0)

FREQUENCY

NEGATIVE FREQUENCY　POSITIVE FREQUENCY

(e) OUTPUT OF FFT

LEVEL
PARTIAL RECEIVING(S15-0)

FREQUENCY

NEGATIVE FREQUENCY　POSITIVE FREQUENCY

(f) OUTPUT AFTER REMOVAL OF
UNNECESSARY COMPONENTS

## FIG. 7

# FIG. 8

PARTIAL RECEIVING
BAND OF ONE SEGMENT

LEVEL

FREQUENCY

UHF14  UHF15  UHF16

(a) SPECTRUM OF RF SIGNAL

PARTIAL RECEIVING(S15-0)

LEVEL

S15-3  S15-1  S15-2  S15-4  S15-6  ....

FREQUENCY

UHF15

(b) SPECTRUM OF RF SIGNAL
(ENLARGEMENT OF PARTIAL RECEIVING OF UHF 15)

PARTIAL RECEIVING(S15-0)
(S15-1)+(S15-2)
(S15-3)+(S15-4)
(S15-5)+(S15-6)

LEVEL

....

FREQUENCY

(c) SPECTRUM AFTER DOWN CONVERSION

LEVEL  PARTIAL RECEIVING(S15-0)

FREQUENCY

(d) SPECTRUM OF OUTPUT OF LPF

LEVEL  PARTIAL RECEIVING(S15-0)

FREQUENCY

NEGATIVE FREQUENCY  POSITIVE FREQUENCY

(e) OUTPUT OF FFT

LEVEL  PARTIAL RECEIVING(S15-0)

FREQUENCY

NEGATIVE FREQUENCY  POSITIVE FREQUENCY
(f) OUTPUT AFTER REMOVAL OF
UNNECESSARY COMPONENTS

## FIG. 9

OUTPUT OF
OFFSET AMOUNT

/103

DC OFFSET
DETECTION
CIRCUIT

FFT OUTPUT → | DC POSITION DETECTION CIRCUIT /201 | → | INTEGRATOR /202 |

FFT OUTPUT → | DC POSITION DETECTION CIRCUIT /301 | → | INTEGRATOR /302 |

OUTPUT OF
OFFSET AMOUNT

FIG. 10

OUTPUT OF
OFFSET AMOUNT

103

DC OFFSET
DETECTION
CIRCUIT

402

FIRST
DIFFERENTIAL
CIRCUIT

401

DC POSITION
DETECTION
CIRCUIT

403

SECOND
DIFFERENTIAL
CIRCUIT

404

COMPARISON
CIRCUIT

405

INTEGRATOR

FFT
OUTPUT

501

DC POSITION
DETECTION
CIRCUIT

502

FIRST
DIFFERENTIAL
CIRCUIT

504

COMPARISON
CIRCUIT

505

INTEGRATOR

FFT
OUTPUT

503

SECOND
DIFFERENTIAL
CIRCUIT

OUTPUT OF
OFFSET AMOUNT

# FIG. 11

FIG. 12

RF INPUT → 1A → 90-DEGREE PHASE SHIFTER (4A)

2A ⊗ → LPF (5A) → ANALOG-TO-DIGITAL CONVERTER (7) → FFT CIRCUIT (9) → UNNECESSARY COMPONENT REMOVAL CIRCUIT (10A)

3A ⊗ → LPF (6A) → ANALOG-TO-DIGITAL CONVERTER (8) → FFT CIRCUIT (9) → UNNECESSARY COMPONENT REMOVAL CIRCUIT (11A)

FREQUENCY DE-INTERLEAVE CIRCUIT (12) → TIME DE-INTERLEAVE CIRCUIT (13) → DE-MAPPING CIRCUIT (14) → BIT DE-INTERLEAVE CIRCUIT (15) → VITERBI DECODING CIRCUIT (16)

BYTE DE-INTERLEAVE CIRCUIT (17) → RS DECODING CIRCUIT (18) → MPEG DECODING CIRCUIT (19) → DIGITAL-TO-ANALOG CONVERTER (20) → VIDEO/AUDIO OUTPUT

24

# FIG. 13

PARTIAL RECEIVING
BAND OF ONE SEGMENT

LEVEL

UHF14　UHF15　UHF16

FREQUENCY

(a) SPECTRUM OF RF SIGNAL

LEVEL

PARTIAL RECEIVING(S15-0)

S15-3 S15-1　S15-2 S15-4 S15-6

....

FREQUENCY

UHF15

(b) SPECTRUM OF RF SIGNAL
(ENLARGEMENT OF PARTIAL RECEIVING OF UHF 15)

PARTIAL RECEIVING(S15-0)+(S15-1)
(S15-2)+(S15-3)
(S15-4)+(S15-5)
(S15-6)+(S15-7)

LEVEL

....

FREQUENCY

(c) LOW IF SPECTRUM

LEVEL　PARTIAL RECEIVING(S15-0)+(S15-1)

FREQUENCY

(d) LOW IF　SPECTRUM OF OUTPUT OF LPF

LEVEL

(S15-1)　PARTIAL RECEIVING(S15-0)

FREQUENCY

NEGATIVE FREQUENCY　POSITIVE FREQUENCY

(e) OUTPUT OF FFT

LEVEL　PARTIAL RECEIVING(S15-0)

FREQUENCY

POSITIVE FREQUENCY

(f) OUTPUT AFTER REMOVAL OF
UNNECESSARY COMPONENTS

## INTERNATIONAL SEARCH REPORT

| International application No. |
| --- |
| PCT/JP02/01119 |

**A. CLASSIFICATION OF SUBJECT MATTER**
Int.Cl⁷ B60C27/00

According to International Patent Classification (IPC) or to both national classification and IPC

**B. FIELDS SEARCHED**

Minimum documentation searched (classification system followed by classification symbols)
Int.Cl⁷ B60C27/00-27/22

Documentation searched other than minimum documentation to the extent that such documents are included in the fields searched
| | | | |
| --- | --- | --- | --- |
| Jitsuyo Shinan Koho | 1941-2002 | Jitsuyo Shinan Toroku Koho | 1996-2002 |
| Kokai Jitsuyo Shinan Koho | 1971-1996 | Toroku Jitsuyo Shinan Koho | 1994-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | Microfilm of the specification and drawings annexed to the request of Japanese Utility Model Application No. 75857/1986 (Laid-open No. 185606/1987) (The Fujikura Cable Works, Ltd.), 26 November, 1987 (26.11.87), Full text; Figs. 1 to 7 (Family: none) | 1-3 |
| X | JP 8-332817 A (Kabushiki Kaisha International Consulting Associate), 17 December, 1996 (17.12.96), Full text; Figs. 1 to 3 (Family: none) | 1-3 |
| X | JP 60-234010 A (The Japan Steel Works, Ltd.), 20 November, 1985 (20.11.85), Full text; Figs. 1 to 4 (Family: none) | 1-3 |

☐ Further documents are listed in the continuation of Box C.   ☐ See patent family annex.

| | | |
| --- | --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 April, 2002 (25.04.02) | Date of mailing of the international search report<br>21 May, 2002 (21.05.02) |
| --- | --- |
| Name and mailing address of the ISA/<br>   Japanese Patent Office | Authorized officer |
| Facsimile No. | Telephone No. |

Form PCT/ISA/210 (second sheet) (July 1998)

26